# EUROPÄISCHE PATENTANMELDUNG

(11) **EP 4 650 030 A1**
(43) Veröffentlichungstag der Anmeldung: **19.11.2025**
(21) Anmeldenummer: 24175530.5
(22) Anmeldetag: 13.05.2024
(51) Int. Cl.: B01D 46/52, B01D 46/76

(54) **VORRICHTUNG UND VERFAHREN ZUM REINIGEN EINES FILTERS**

(71) Anmelder: Kemaro AG, 8360 Eschlikon (CH)
(72) Erfinder: Gadient, Martin, 8363 Bichelsee (CH); Möckli, Simon, 9500 Wil (CH)
(74) Vertreter: Hepp Wenger Ryffel AG

(57) **Zusammenfassung**

Die Erfindung betrifft eine Vorrichtung zum Reinigen eines Filters, vorzugsweise eines Lamellenfilters. Die Vorrichtung umfasst eine um eine Längsachse rotierbare Walze, welche eine Vielzahl an auf einer Aussenwand der Walze verlaufenden wendelartigen Erhebungen umfasst. Als Alternative oder zusätzlich dazu umfasst die Walze eine Vielzahl an auf einer Aussenwand der Walze zur Längsachse der Walze schräg angeordnete, ringförmige Erhebungen. Jeweils zwei benachbarte Erhebungen sind in einem axialen Abstand entlang der Längsachse der Walze und um einem Versatzwinkel um die Längsachse der Walze relativ versetzt zueinander angeordnet.

## Beschreibung

Die vorliegende Erfindung eine Vorrichtung und ein Verfahren zum Reinigen eines Filters, vorzugsweise eines Lamellenfilters, sowie ein Filterungssystem.

In Geräten, in denen Filter verbaut sind, die Festkörper aus einem Gas (zum Beispiel Luft als Gasgemisch) und/oder aus einer Flüssigkeit filtern, setzen sich die gefilterten Festkörper während des Betriebs im Filter fest. Um die Filterleistung nicht zu beeinträchtigen, müssen Filter deshalb regelmässig gereinigt werden.

Aus dem Stand der Technik sind verschiedene Vorrichtungen zur automatisierten Filterreinigung bekannt. Zweck dieser Vorrichtungen ist es, das manuelle Reinigen von verschmutzten Filtern zu ersetzen.

Aus EP 2601876 B1 (PANASONIC CORP., 07.12.2016) ist eine Staubentfernungseinheit zum Reinigen eines Lamellenfilters als Teil eines Staubsaugers bekannt, welche ein Staubentfernungselement umfasst. Das Staubentfernungselement erzeugt durch lineares Hin- und Herbewegen eine Vibration, welche auf den Filter übertragen wird. Nachteilig daran ist, dass sich der tief in den Falten festsitzende Staub nicht vollständig aus dem Filter lösen lässt. Zudem wirken sich die starken Vibrationen der Staubentfernungseinheit nicht nur auf den Filter, sondern auch auf die anderen Komponenten des Staubsaugers aus. Das führt zu einem stärkeren Verschleiss dieser Teile, da sie durch die Vibrationen beschädigt werden können. Zudem funktionieren vibrationsempfindliche Komponenten eines Geräts (beispielsweise Lidar-Sensoren bei autonomen Reinigungsgeräten) während der Filterreinigung wegen der Vibrationen nicht oder nur eingeschränkt.

In US 8327487 B2 (BLACK & DECKER INC., 11.12.2012) werden ebenfalls Lösungen zur Filterreinigung offenbart mit einem vibrierenden Element, wobei die erzeugten Vibrationen auf den Filter übertragen werden. Dabei entstehen die bereits oben genannten Nachteile. Zudem werden Lösungen gezeigt, bei denen ein Dorn über die Filterlamellen gezogen werden, wodurch der sich im Filter befindliche Schmutz löst. Nachteilig hier ist, dass durch das Reiben des Dorns am Filter ein starker Abrieb am Filter erzeugt wird, was bis zum Reissen des Filters führen kann. Ein beschädigter Filter kann zu Beschädigungen von weiteren Komponenten im Filterungssystem (beispielsweise Pumpen, Gebläse und Ventile) führen.

Es ist somit Aufgabe der vorliegenden Erfindung, zumindest einige, wenn nicht alle Nachteile der Systeme und Verfahren des Stands der Technik zu überwinden. Insbesondere ist es Aufgabe der Erfindung eine verbesserte Vorrichtung sowie ein verbessertes Verfahren zum Reinigen eines Filters, insbesondere eines Lamellenfilters, bereitzustellen.

Die Aufgabe wird durch eine Vorrichtung zum Reinigen eines Filters, ein Filterungssystem, und ein Verfahren zum Reinigen eines Filters gemäss den unabhängigen Patentansprüchen gelöst. Vorteilhafte Ausgestaltungen und Weiterbildungen sind Gegenstand der abhängigen Ansprüche.

Ein erster Aspekt der Erfindung betrifft eine Vorrichtung zum Reinigen eines Filters, vorzugsweise eines Lamellenfilters. Die Vorrichtung umfasst eine um eine Längsachse rotierbare Walze. Die Walze umfasst eine Vielzahl an auf einer Aussenwand der Walze verlaufenden wendelartigen Erhebungen. Zusätzlich dazu oder als Alternative umfasst die Walze eine Vielzahl an auf einer Aussenwand der Walze zur Längsachse der Walze schräg angeordnete, ringförmige Erhebungen. Jeweils zwei benachbarte Erhebungen sind in einem axialen Abstand entlang der Längsachse der Walze und um einem Versatzwinkel um die Längsachse der Walze relativ versetzt zueinander angeordnet.

Ein Filter ist eine Vorrichtung, die dazu dient, feste Partikel, Verunreinigungen oder sonstige unerwünschte Festkörper aus einer durchströmenden Flüssigkeit oder einem Gas zu entfernen. Der Filter ist physisch so gestaltet, dass er bestimmte Partikel zurückhalten kann, während die gereinigte Substanz passieren kann.

Ein Lamellenfilter (auch Plissee-Filter oder Faltenfilter genannt) ist eine Art von Filter, der aus mehreren, in regelmässigen Abständen angeordneten Lamellen besteht. Diese Lamellen sind so konfiguriert, dass sie entweder parallel, in einem zickzackförmigen oder anderweitig angeordnet sein können. Typischerweise wird ein Lamellenfilter aus einem Stück Filtermaterial in die gewünschte Form gefaltet. Die Anordnung und Gestaltung der Lamellen sind darauf ausgerichtet, eine möglichst grosse Oberfläche für die Filtration bereitzustellen, während gleichzeitig ein guter Durchfluss des Mediums ermöglicht wird.

Die erfindungsgemässe Vorrichtung kann auch mehr als eine Walze umfassen.

Die Walze der erfindungsgemässen Vorrichtung kann eine zylinderförmige Grundform haben, auf deren Aussenwand die Erhebungen angeordnet sind. Die Grundform der Walze umfasst die Walze abzüglich der Erhebungen. Die Walze kann aber auch eine andere Grundform haben. Die Querschnittsfläche senkrecht zur Längsachse kann also beispielsweise kreisförmig oder ein Polygon sein. Bei einer zylinderförmigen Grundform entspricht die Aussenwand der Walze der Mantelfläche des Zylinders.

Im Rahmen der vorliegenden Erfindung ist eine "wendelartige Erhebung" eine Erhebung, die sich in Form einer Schraubenlinie mit konstanter oder variabler Steigung um die Aussenwand der Walze windet. Der Begriff "wendelartige Erhebung" schliesst auch Formen ein, die als "schraubenlinienförmige Erhebungen" und "helikoidale Erhebungen" bekannt sind.

Eine schräg angeordnete, ringförmige Erhebung ist im Rahmen der vorliegenden Erfindung eine Struktur, die sich in Form eines Rings oder Kreises ausgehend von der Aussenwand um die Längsachse der Walze erstreckt und dabei eine Neigung aufweist. «Schräg angeordnet» bedeutet hierbei, dass die ringförmigen Erhebungen weder parallel noch rechtwinklig zur Längsachse angeordnet sind. Vorzugsweise ist die Neigung aller schräg angeordneten, ringförmigen Erhebungen identisch. Die schräg angeordneten, ringförmigen Erhebungen können in die gleiche Richtung oder in unterschiedliche Richtungen geneigt sein.

Eine einzelne wendelartige Erhebung kann aus mehreren zueinander wendelartig angeordneten Erhebungen bestehen, welche gemeinsam die Funktion einer wendelartigen Erhebung übernehmen. Gleichermassen kann eine einzelne schräg angeordnete, ringförmige Erhebung aus mehreren Erhebungen bestehen, welche gemeinsam die Funktion einer schräg angeordneten, ringförmigen Erhebung übernehmen. Die Funktion der Erhebungen wird weiter unten genauer beschrieben.

Der axiale Abstand entlang der Längsachse bezeichnet den räumlichen Abstand zwischen zwei Erhebungen, die entlang der Längsachse der Walze angeordnet sind. Dieser Abstand wird in einer geraden Linie gemessen, die parallel zur Längsachse verläuft. Im Falle von zur Längsachse schräg angeordneten, ringförmigen Erhebungen wird der axiale Abstand zwischen zwei Erhebungen vorzugsweise anhand der Mittelpunkte der ringförmigen Erhebungen gemessen. Der Versatzwinkel um die Längsachse beschreibt hingegen die relative Drehung oder Rotation einer Erhebung um die Längsachse im Vergleich zu einer anderen Erhebung. Der Versatzwinkel kann auch 0° sein.

Der axiale Abstand und/oder der Versatzwinkel zwischen einer ersten Erhebung und einer zweiten Erhebung müssen nicht unbedingt gleich sein wie der axiale Abstand und/oder der Versatzwinkel zwischen der zweiten Erhebung und einer dritten Erhebung.

Im Rahmen der vorliegenden Erfindung ist der Begriff «oder» als eine ausschliessende Disjunktion zu verstehen. «A oder B» sagt aus, dass genau eine der beiden Aussagen wahr ist (wenn die Disjunktion wahr ist).

Die erfindungsgemässe Vorrichtung ermöglicht eine verbesserte Filterreinigung gemäss den nachfolgenden Ausführungen. Die Vorrichtung ist im Betrieb vorzugsweise stromabwärts von einem Filter angeordnet. Das heisst, ein transportiertes Medium (Gas und/oder Flüssigkeit) und darin allenfalls vorhandene Festkörper durchfliessen zuerst den Filter, bevor sie auf die im Medienstrom hinter dem Filter liegende Vorrichtung trifft. So kommen die gefilterten Festkörper nicht mit der Vorrichtung, insbesondere nicht mit der Walze, in Kontakt. Alternativ ist eine Anordnung möglich, wobei die Vorrichtung stromaufwärts vom Filter angeordnet ist. Dabei sollte darauf geachtet werden, dass die gefilterten Festkörper die Funktionsweise der Vorrichtung nicht beeinträchtigen oder diese sogar beschädigen. Vorzugsweise ist der zu reinigende Filter horizontal angeordnet, wobei bei einem Lamellenfilter die Faltenlinie der Lamellen horizontal sind. Vorzugsweise ist die Vorrichtung bei bestimmungsgemässen Gebrauch oberhalb des zu reinigenden Filters angeordnet. Ist die Vorrichtung während der Filterreinigung stromabwärts und oberhalb des Filters angeordnet, fallen die gelösten Festkörper durch die Schwerkraft aus dem Filterbereich.

Im Betrieb ist die Walze der erfindungsgemässen Vorrichtung so angeordnet, dass zu jedem Zeitpunkt während des Rotierens zumindest ein Teil der Vielzahl an Erhebungen in Zwischenräume des zu reinigenden Filters, vorzugsweise des Lamellenfilters, ragt. Zur Filterreinigung wird die Walze um ihre Längsachse rotiert und die mit den Falten des Filters in Kontakt stehenden Erhebungen bewegen die Falten aus deren Ausgangsposition in axialer Richtung der Walze.

Der axiale Abstand und der Versatzwinkel zwischen zwei benachbarten Erhebungen führt bei der Rotation der Walze zu einem Aufspreizen der Filterfalten. Das Aufspreizen erfolgt dabei besonders gleichmässig, wobei zwei benachbarte Lamellen zeitlich versetzt zueinander aufgespreizt werden.

Eine an der Aussenwand der Walze verlaufende wendelartige Erhebung kontaktiert bei einer Walzenumdrehung mit einem ersten Endbereich eine Filterfalte. Nach dem rotationsbedingten Erreichen des zweiten Endbereiches der Erhebung, geht der Kontakt zwischen der Erhebung und der Filterfalte verloren und die Filterfalte bewegt sich zurück in Ihre Ausgangsposition oder in die Richtung der Ausgangsposition. Diese Rückbewegung kann ruckartig erfolgen.

Bei einer schräg angeordneten, ringförmigen Erhebung wird die die Filterfalte bei einer Walzenumdrehung ebenfalls in axialer Richtung bewegt, der Kontakt zwischen Erhebung und Filterfalte geht jedoch nicht verloren, sondern die Filterfalte wird durch die Erhebung wegen derer schrägen Anordnung in Bezug auf die Längsachse der Walze kontinuierlich hin- und herbewegt.

Die erfindungsgemässe Vorrichtung ermöglicht deswegen eine besonders gute Filterreinigung, da benachbarte Filterfalten zeitlich versetzt gespreizt werden. Einzelne Filterfalten werden besonders gut voneinander gespreizt. Das Bewegen und das Aufspreizen der Filterfalten, und gegebenenfalls das schnelle Zurückbewegen, führt dazu, dass sich im Filter befindliche Festkörper wie Staub besonders gut aus dem Filter lösen und aus dem Filter herausfallen können.

Die Vorrichtung ist typischerweise in einem Gerät (zum Beispiel einem Reinigungsgerät) eingebaut, welches während der Filterreinigung stillsteht. Durch die verbesserte Filterreinigung ist die Filterreinigungsdauer kürzer und der Filter muss auch weniger häufig gereinigt werden, was zu verkürzten Stillstandszeiten und schliesslich zu einer effizienteren Gerätenutzung führt. Wird die Vorrichtung beispielsweise in einem autonomen Gerät eingesetzt, kann dieses Gerät somit auch länger autonom im Einsatz bleiben.

In gewissen Filterreinigungsvorrichtungen des Stands der Technik (zum Beispiel in EP 2601876 B1, PANASONIC CORP., 07.12.2016) werden Vibrationen durch eine vibrierende Komponente erzeugt und diese Vibrationen werden über mindestens eine Zwischenkomponente auf den Filter übertragen, um auch den Filter in Vibration zu versetzen und Festkörper daraus zu lösen. Solche Vibrationen wirken sich jedoch auch nachteilig auf andere Komponenten des entsprechenden Geräts aus, was zu einer kürzeren Gerätelebensdauer führen kann. Bei der erfindungsgemässen Lösung entstehen die Vibrationen direkt beim Filter durch dessen Bewegung. Andere Komponenten eines zur Vorrichtung gehörenden Geräts sind höchstens in vernachlässigbarem Ausmass von Vibrationen betroffen und das Gerät wird somit geschont.

Abgesehen davon, dass andere Gerätekomponenten durch Vibrationen beschädigt werden können, kann auch ihre Funktionsweise vibrationsbedingt eingeschränkt werden. Beispielsweise können autonome Reinigungsgeräte mit Lidar-Sensoren zur Navigation ausgestattet sein. Solche Lidar-Sensoren sind sehr vibrationsempfindlich und würden bei starken Vibrationen fehlerhafte Daten liefern. Dank der vibrationsarmen Filterreinigung der vorliegenden Erfindung können die Lidar-Sensoren auch während der laufenden Filterreinigung die räumliche Umgebung des Geräts messen.

Ausserdem schont die Walze der erfindungsgemässen Vorrichtung den zu reinigenden Filter. Die zwischen die Filterfalten eindringenden Erhebungen der Walze ermöglichen eine grosse Kontaktfläche zwischen der Oberfläche der Erhebungen und der Filteroberfläche, was zu einer gleichmässigeren Verteilung der Kraft über die Kontaktfläche und somit zu einer geringeren Flächenpressung führt. Die lokale Druckbelastung wird dadurch reduziert und der Verschleiss des Filters sowie der Walze wird verringert. Würde ein Lamellenfilter beispielsweise viel weniger sanft durch einen Dorn in Bewegung und Vibration versetzt, der senkrecht zur Richtung der Filterfalten über den Filter gezogen wird, käme es zu einem viel stärkeren Abrieb und Materialverschleiss.

Somit ermöglicht die erfindungsgemässe Vorrichtung eine verbesserte Reinigung eines Filters, insbesondere eines Lamellenfilters.

In einer bevorzugten Ausführungsform des ersten Aspekts der Erfindung haben die wendelartigen Erhebungen eine identische Steigung und der axiale Abstand entspricht 10 % bis 150 % der Steigung, bevorzugt 20 % bis 100 % der Steigung, noch mehr bevorzugt 30 % bis 70 % der Steigung, am meisten bevorzugt 50 % der Steigung.

Mit der Steigung einer wendelartigen Erhebung ist die Strecke parallel zur Längsachse der Walze gemeint, um die sich eine wendelartige Erhebung bei einer vollen Umdrehung um die Walze windet (oder winden würde, wenn sie eine volle Umdrehung machen würde).

Die Dimensionen der einzelnen Komponenten der Walze (z.B. die Steigung der wendelartigen Erhebungen, die radiale Höhe der Erhebungen, die axiale Distanz zwischen den Erhebungen) werden je nach Verwendungszweck der Vorrichtung und Dimensionen des Filters gewählt.

Es hat sich herausgestellt, dass die genannten Verhältnisse zwischen der Steigung der wendelartigen Erhebung und der axialen Distanz zwischen benachbarten Erhebungen eine für die Filterreinigung besonders vorteilhafte Anordnung der Erhebungen darstellen.

In einer weiteren bevorzugten Ausführungsform des ersten Aspekts der Erfindung reicht der Versatzwinkel von 1° bis 180°, vorzugsweise von 3° bis 90°, noch mehr bevorzugt von 5° bis 30°, am meisten bevorzugt von 10° bis 20°.

Im Betrieb bestimmt unter anderem der Versatzwinkel zwischen benachbarten Erhebungen während der Walzenrotation den zeitlichen Versatz des Spreizens der Lamellenfilter sowie das räumliche Ausmass des Spreizens. Es hat sich gezeigt, dass sich die genannten Versatzwinkelbereiche für die Filterreinigung besonders gut eignen.

In einer anderen bevorzugten Ausführungsform des ersten Aspekts der Erfindung erstrecken sich die wendelartigen Erhebungen jeweils über einen Mittelpunktswinkel von 180° bis 340°, vorzugsweise 220° bis 320°, am meisten bevorzugt 260° bis 300° des Umfangs der Aussenwand der Walze.

Der Mittelpunktswinkel beschreibt den Winkel, den eine wendelartige Erhebung an der Basis der Aussenwand der Walze umstreicht. Er wird in diesem Zusammenhang folgendermassen gebildet: Auf einer Projektion der wendelartigen Erhebung auf die Grundfläche der Walze werden an jeweils einem Endbereich der wendelartigen Erhebung ein erster und ein zweiter Endpunkt an der Basis der Aussenwand bestimmt. Die Endpunkte liegen beim Übergang von der Erhebung zur Aussenwand, auch wenn ein Endbereich der Erhebung beispielsweise überhängend ist. Zwischen dem ersten Endpunkt und der Position der Längsachse der Walze auf der Projektion (dem Mittelpunkt) wird eine erste Gerade gezogen; und zwischen dem zweiten Endpunkt und der Position der Längsachse auf der Projektion wird eine zweite Gerade gezogen. Der zur Erhebung gerichtete Winkel zwischen der ersten und zweiten Geraden entspricht dem Mittelpunktswinkel. Bei einem Mittelpunktswinkel von 360° würde sich somit eine wendelartige Erhebung genau einmal um den Umfang der Aussenfläche winden.

Die genannten Winkelbereiche haben sich als besonders vorteilhaft für die Filterreinigung herausgestellt.

In einer weiteren bevorzugten Ausführungsform des ersten Aspekts der Erfindung haben die wendelartigen Erhebungen eine Steigung, welche von 100 % bis 600 %, bevorzugt von 200 % bis 500 %, noch mehr bevorzugt von 300 % bis 400 %, am meisten bevorzugt von 320 % bis 340 % einer maximalen radialen Höhe der wendelartigen Erhebungen entspricht.

Im Rahmen der vorliegenden Erfindung bezeichnet die radiale Höhe einer wendelartigen Erhebung den radialen Abstand zwischen der Aussenwand der Walze und einem höchsten Punkt der Erhebung, gemessen entlang einer Linie, die senkrecht zur Längsachse der Walze steht. Bei einer variierenden Höhe der wendelartigen Erhebung, bei der die Erhebung entlang ihres Verlaufs unterschiedliche Höhen aufweist, bezeichnet die maximale radiale Höhe den grössten dieser Abstände.

Die angegebenen Zahlenbereiche des Verhältnisses zwischen der Steigung und der maximalen radialen Höhe haben sich als besonders vorteilhaft herausgestellt.

In einer bevorzugten Ausführungsform des ersten Aspekts ist ein Endbereich der wendelartigen Erhebungen breiter als ein an den Endbereich angrenzender Bereich.

Wie weiter oben beschrieben hat eine wendelartige Erhebung typischerweise zwei Endbereiche. Bevorzugt ist der oben beschriebene zweite Endbereich der verbreiterte Endbereich gemäss dieser bevorzugten Ausführungsform. Vorzugsweise ist der Endbereich der Erhebung, welcher während der Walzenrotation zwischen die Filterfalten eindringt und somit den Kontakt zwischen Filter und Erhebung herstellt, ein solcher verbreiterter Endbereich. Das Filtermaterial, welches ansonsten durch die sich häufig wiederholende Bewegung stark beansprucht wird, wird durch das verbreiterte und stumpfe Ende der Erhebung geschont.

In einer weiteren bevorzugten Ausführungsform des ersten Aspekts der Erfindung beträgt eine maximale radiale Höhe der Erhebungen von 3 % bis 120 %, bevorzugt von 5 % bis 50 %, noch mehr bevorzugt von 15 % bis 40 %, am meisten bevorzugt von 20 % bis 30 % des Durchmessers der Aussenwand der Walze.

Die absoluten Werte der Abmessungen der Walze werden in Abhängigkeit von den Abmessungen des verwendeten Filters und dem für die Vorrichtung verfügbaren Platz gewählt.

Bei einem kreisförmigen Querschnitt der Aussenwand senkrecht zur Längsachse der Walze entspricht der Durchmesser der Aussenwand dem Durchmesser des kreisförmigen Querschnitts. Als Verallgemeinerung des klassischen Durchmesserbegriffs wird bei einem polygonförmigen Querschnitt der Aussenwand der Durchmesser als die grösste Entfernung zwischen zwei gegenüberliegenden Punkten auf der Umrisslinie des Querschnitts, gemessen in einer Ebene senkrecht zur Längsachse, definiert. Dieser Wert wird auch als Spannweite oder maximale Ausdehnung eines Polygons bezeichnet.

Die genannten Zahlenbereiche des Grössenverhältnisses zwischen der maximalen radialen Höhe und des Durchmessers der Aussenwand der Walze ermöglichen eine hohe Kontaktfläche zwischen den Erhebungen und der Filteroberfläche, ohne dass die Filterlamellen beim Eindringen der Erhebungen in die Filterspalte umknicken. Zudem hat sich gezeigt, dass die gewählten Geometrien der erfindungsgemässen Walze einen verhältnismässig kleinen Platzbedarf und ein verhältnismässig kleines Gewicht der Vorrichtung ermöglichen. Somit ist das benötigte Volumen der Vorrichtung besonders klein und die Reinigungsvorrichtung benötigt unter anderem wegen des geringeren Gewichts weniger Energie. Die Filterreinigung ist auch deswegen äusserst energieeffizient, weil die Bewegung direkt auf das Filtermaterial angewendet wird. Bei den Vibrationsantrieben des Stands der Technik muss eine grössere Masse in Bewegung versetzt werden.

In einer weiteren bevorzugten Ausführungsform des ersten Aspekts der Erfindung weisen die wendelartigen Erhebungen eine veränderliche radiale Höhe auf.

In einer bevorzugten Ausführungsform weist mindestens ein Endbereich der wendelartigen Erhebungen eine Auslaufschräge auf. Zusätzlich oder als Alternative dazu ist mindestens ein Endbereich der wendelartigen Erhebungen abgerundet.

Eine Auslaufschräge eines Endbereichs bezeichnet die graduelle Reduktion der radialen Höhe der Erhebung in Richtung eines Endpunktes der Erhebung. Die Erhebung kann mittels Auslaufschräge auf einen Wert von 0 mm auslaufen oder auf einen Wert oberhalb von 0 mm.

Wenigstens einer der Endbereiche kann in Bezug auf die Aussenwand der Walze überhängend ausgebildet sein.

Wie oben beschrieben sind die jeweiligen Endbereiche der wendelartigen Erhebungen so ausgestaltet, dass der Reibungsverschleiss möglichst gering ist. Deshalb ist es vorteilhaft, wenn der Endbereich der wendelartigen Erhebung, der die Filterfalte während der Walzenrotation physisch kontaktiert abgerundet ist. Dieses stumpfe Ende schont das Filtermaterial beim Eindringen der wendelartigen Erhebung zwischen zwei Filterfalten. So werden potenzielle Stresspunkte verringert. Eine Auslaufschräge (auch tangentialer Endbereich genannt) hilft, den Kontakt mit der Filterfalte schlagartig zu verlieren. Würde der Kontakt kontinuierlich reduziert werden, wäre die Flächenpressung besonders hoch, wenn die Filterfalte kurz vor dem Loslassen nur noch an einer kleinen Spitze der wendelartigen Erhebung gehalten wird. Mit einer Auslaufschräge wird die Abnutzung des Filtermaterials daher reduziert.

In einer bevorzugten Ausführungsform umfasst die Vorrichtung ausserdem einen Antrieb zum Rotieren der Walze. Wenn die Vorrichtung mehr als eine Walze umfasst, kann entweder ein Antrieb mehrere Walzen in Rotation versetzen oder es werden mehrere Antriebe eingesetzt.

In einer weiteren bevorzugten Ausführungsform des ersten Aspekts liegt ein Abschrägungswinkel der zur Längsachse der Walze schräg angeordneten, ringförmigen Erhebungen im Bereich von 1° bis 40°, bevorzugt im Bereich von 3° bis 30°, noch mehr bevorzugt im Bereich von 5° bis 20°, am meisten bevorzugt im Bereich von 10° bis 15°.

Der Abschrägungswinkel ist im Rahmen der vorliegenden Erfindung der Winkel zwischen einem Normalenvektor der ringförmigen Erhebungen und der Längsachse der Walze.

Ein zweiter Aspekt der Erfindung betrifft ein Filterungssystem. Das Filterungssystem umfasst ein Gebläse und einen Filter, vorzugsweise einen Lamellenfilter. Der Filter ist gekoppelt mit dem Gebläse über ein Luftführungssystem. Zudem umfasst das Filterungssystem eine Vorrichtung zum Reinigen des Filters gemäss dem ersten Aspekt der Erfindung. Die Vorrichtung ist derart angeordnet oder anordenbar, dass zumindest ein Teil der Vielzahl an Erhebungen der Walze in Zwischenräume des Filters, vorzugsweise des Lamellenfilters, ragt.

Der Filter kann je nach Verwendungszweck des Filterreinigungssystem stromaufwärts oder stromabwärts in Bezug auf das Gebläse angeordnet sein.

In einer bevorzugten Ausführungsform des zweiten Aspekts der Erfindung ist das Luftfilterungssystem Teil eines Geräts, welches ausgewählt ist aus der folgenden Gruppe: Reinigungsgeräte, vorzugsweise Reinigungsroboter; Klimaanlagen; Lüftungsanlagen; Heizungsanlagen; und Luftreinigungsgeräte.

Zu den Reinigungsgeräten gehören insbesondere Staubsauger; zu den Reinigungsrobotern gehören insbesondere Kehrmaschinenroboter mit Staubabsaugung und Staubsaugroboter.

Da die erfindungsgemässe Vorrichtung des ersten Aspekts der Erfindung wie weiter oben beschrieben besonders platzsparend, leicht und somit energiesparend ist, eignet sich ein solches Luftfilterungssystem besonders für akkubetriebene Geräte. Auch für handgeführte Geräte sind ein niedriges Gewicht und ein kleiner Platzbedarf vorteilhaft.

Im Kontext von Staubsaugern, Staubsaugrobotern und Kehrmaschinenrobotern mit Staubabsaugung wird der Begriff "Staub" weit gefasst und bezieht sich auf eine Vielzahl von Festkörpern und Partikeln, die von Staubsaugern oder Kehrgeräten aufgenommen werden können. Diese Definition schliesst nicht nur haushaltsübliche Verschmutzungen wie Hausstaub, Pollen, Tierhaare und Krümel ein, sondern erstreckt sich auch auf gröbere und industrielle Rückstände wie Metallspäne, Sägemehl, pulverförmige Chemikalien und Bauschutt.

Kehrmaschinenroboter sind beispielsweise aus EP 3893710 B1 (KE-MARO AG, 18. Oktober 2023) bekannt. Ein Kehrmaschinenroboter mit Staubabsaugung ist ein Reinigungsgerät für die automatisierte Säuberung von Böden. Dabei sind die Funktionen eines Kehrgeräts mit denen eines Staubsaugers kombiniert, indem sowohl feste Partikel und gröbere Verunreinigungen durch Kehren als auch feinere Staubpartikel durch Absaugen entfernt werden.

In einer weiteren bevorzugten Ausführungsform des zweiten Aspekts der Erfindung ist die Vorrichtung derart angeordnet oder anordenbar, dass die Längsachse der Walze in einem Winkel von 30° bis 150°, vorzugsweise von 50° bis 130°, mehr bevorzugt von 70° bis 110°, noch mehr bevorzugt von 85° bis 95°, am meisten bevorzugt von ungefähr 90° zu einer Faltenrichtung des Filters, vorzugsweise des Lamellenfilters, angeordnet ist.

Bei einem Lamellenfilter ist die Faltenrichtung des Filters die geometrische Ausrichtung, entlang derer sich die Falten oder Lamellen erstrecken.

Ein dritter Aspekt der Erfindung betrifft einen Reinigungsroboter, vorzugsweise einen Kehrmaschinenroboter mit Staubabsaugung. Der Reinigungsroboter umfasst eine Vorrichtung gemäss erstem Aspekt der Erfindung und/oder ein Filterungssystem gemäss zweitem Aspekt der Erfindung.

Ein vierter Aspekt der Erfindung betrifft ein Verfahren zum Reinigen eines Filters, vorzugsweise eines Lamellenfilters. Das Verfahren wird vorzugsweise mit einer Vorrichtung des ersten Aspekts der Erfindung durchgeführt. Das Verfahren umfasst den Schritt: a. Rotieren einer Walze um ihre Längsachse. Die Walze umfasst eine Vielzahl an auf einer Aussenwand der Walze verlaufenden wendelartigen Erhebungen. Zusätzlich dazu oder als Alternative umfasst die Walze eine Vielzahl an auf einer Aussenwand der Walze zur Längsachse der Walze schräg angeordnete, ringförmige Erhebungen. Die Walze wird derart rotiert, dass einzelne Falten des Filters durch die rotierenden Erhebungen bewegt werden; und im Filter festsitzende Festkörper durch das Bewegen gelöst werden.

Die rotierenden Erhebungen sind so zu verstehen, dass die Erhebungen als fest verbundener Teil der rotierenden Walze um die Längsachse der Walze rotieren.

Die Filterreinigung wird vorzugsweise in Filterreinigungsintervallen nach bestimmten Zeitabständen durchgeführt. Die Zeitabstände können vordefinierte Zeitabstände sein; oder der Verschmutzungsgrad des Filters kann bestimmt werden (beispielsweise durch Messung eines verschmutzungsbedingten Druckabfalls) und die Filterreinigung wird bei einem bestimmten Verschmutzungsgrad durchgeführt.

Zur Filterreinigung wird der Normalbetrieb des Geräts (beispielsweise die Absaugung bei einem Kehrmaschinenroboter mit Staubabsaugung) vorzugsweise pausiert.

Das Verfahren des vierten Aspekts der Erfindung ermöglicht eine verbesserte Reinigung eines Filters, insbesondere eines Lamellenfilters. Die in Bezug auf die vorangehenden Aspekte der Erfindung genannten technischen Effekte und Vorteile gegenüber dem Stand der Technik treffen auch auf den vierten Aspekt zu. In einer bevorzugten Ausführungsform des Verfahrens des vierten Aspekts der Erfindung ist die Walze so angeordnet, dass zu jedem Zeitpunkt während des Rotierens zumindest ein Teil der Vielzahl an Erhebungen in Zwischenräume des Filters, vorzugsweise des Lamellenfilters, ragt.

In einer weiteren bevorzugten Ausführungsform des vierten erfindungsgemässen Aspekts werden die Falten derart bewegt, dass die einzelnen Falten durch die Erhebungen aus einer Ausgangsposition in axialer Richtung der Walze verschoben werden und sich in die Richtung der Ausgangsposition zurückbewegen. Vorzugsweise bewegen sie sich ruckartig in die Richtung der Ausgangsposition zurück.

Die Wirkungsweise der Filterreinigung wurde weiter oben bereits genauer beschrieben. Im Wesentlichen führt das Rotieren der Walze und der darauf angebrachten Erhebungen zu einem kontinuierlichen Spannungsaufbau (Bewegen der Falten aus deren Ausgangsposition) und Spannungsabbau (Bewegen der Falten in Richtung der Ausgangsposition) im Filter in axialer Richtung. Durch die Bewegung und das Aufspreizen der Filterlamellen lösen sich im Filter festsitzende Festkörper. Der Spannungsabbau kann aktiv geschehen, also durch Zurückbewegen der Falte in Kontakt mit einer Erhebung der Walze. Dafür eignen sich beispielsweise auf der Aussenwand der Walze zur Längsachse der Walze schräg angeordnete, ringförmige Erhebungen. Der Spannungsabbau kann aber auch passiv geschehen, wobei der Kontakt zwischen Erhebung und Falte unterbrochen wird, wodurch die Falte durch Zugspannung im Filter in Richtung Ausgangsposition zurückgeführt wird. Eine solche, selbständige Rückbewegung wird im Rahmen der vorliegenden Erfindung als ruckartige Rückbewegung verstanden. Dafür eignen sich beispielsweise auf der Aussenwand der Walze verlaufende wendelartige Erhebungen.

In einer weiteren bevorzugten Ausführungsform des vierten Aspekts der Erfindung bewegt jeweils eine Erhebung höchstens drei Falten des Filter zusammen, vorzugsweise höchstens zwei Falten des Filters zusammen, noch mehr bevorzugt höchstens eine Falte des Filters bewegt.

So wird nicht eine grosse Anzahl Falten zusammengedrückt, was das Entfernen von Festkörpern aus dem Filter erleichtert. Das verringert auch den Widerstand gegen die Drehung der Walze und somit auch das benötigte Drehmoment zur Überwindung dieses Widerstands. Durch diesen energieeffizienten Betrieb wird daher ein kleinerer Antriebsmotor benötigt.

Die Erfindung wird nun anhand konkreter Ausführungsbeispiele beschrieben. Diese Ausführungsformen sollen den Kern der Erfindung in keiner Weise einschränken, sondern dienen vielmehr das Verständnis der Erfindung zu erleichtern.
- Fig. 1:: Isometrische Ansicht einer Walze (4) mit wendelartigen Erhebungen (5) auf der Aussenwand (10);
- Fig. 2:: Vorderansicht einer Walze (4) mit wendelartigen Erhebungen (5) auf der Aussenwand (10);
- Fig. 3:: Seitenansicht einer Walze (4) mit wendelartigen Erhebungen (5) auf der Aussenwand (10);
- Fig. 4:: Illustration des erfindungsgemässen Verfahrens zum Reinigen eines Filters (2) und Entfernen von Festkörpern (1) mit einer Walze (4) mit wendelartigen Erhebungen (5) auf der Aussenwand (10);
- Fig. 5:: Vorderansicht einer Walze (4) mit zur Längsachse (3) der Walze (4) schräg angeordneten, ringförmigen Erhebungen (6) auf der Aussenwand (10); und
- Fig. 6:: Isometrische Ansicht einer Walze (4) mit zur Längsachse (3) der Walze (4) schräg angeordneten, ringförmigen Erhebungen (6) auf der Aussenwand (10).

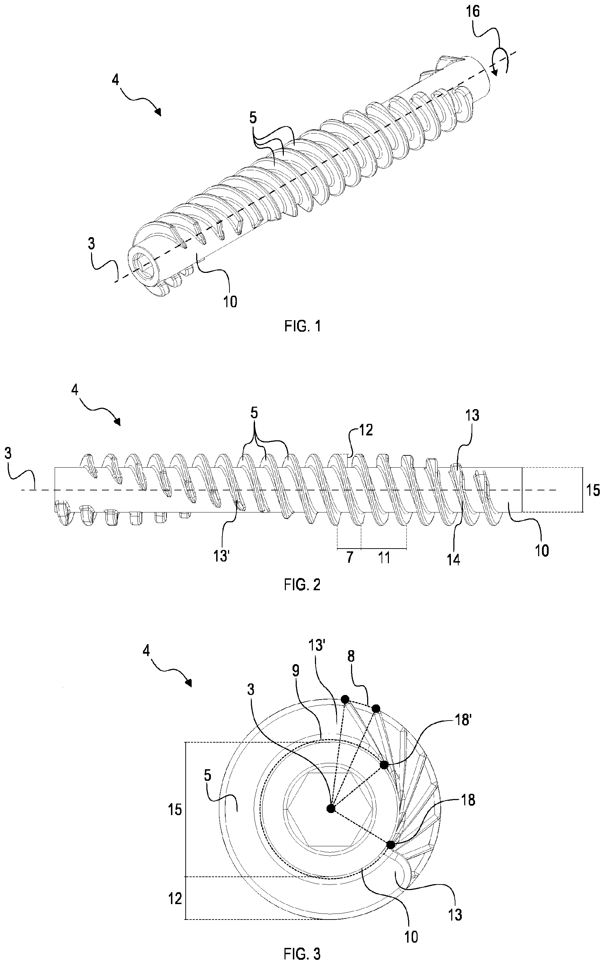

Figur 1 zeigt ein eine isometrische Ansicht und Figur 2 zeigt eine Vorderansicht eine Walze (4) einer erfindungsgemässen Reinigungsvorrichtung als Beispiel. Figur 3 zeigt eine Seitenansicht dieser Walze (4). Die Walze (4) hat eine zylindrische Grundform. Auf der Aussenwand (10) der Walze (4) ist eine Vielzahl an wendelartigen Erhebungen (5; nur teilweise markiert) angeordnet. Der axiale Abstand (7) zwischen zwei benachbarten Erhebungen (5) entspricht in diesem Ausführungsbeispiel ungefähr 50 % der Steigung (11) der Erhebungen (5). Die Steigung (11) der Erhebungen (5) entspricht ungefähr 330 % der maximalen radialen Höhe (12), welche sich von der Aussenwand (10) der Walze (4) bis zum Punkt erstreckt, welcher am weitesten von der Längsachse (3) der Walze (4) entfernt ist.

Der Versatzwinkel (8) zwischen zwei benachbarten Erhebungen (5) beträgt ungefähr 15° in diesem Ausführungsbeispiel. Die wendelartigen Erhebungen (5) weisen unterschiedlich geformte Endbereiche (13, 13') auf. Ein Endbereich (13) ist breiter als der angrenzende Bereich (14). Ausserdem ist dieser Endbereich (13) abgerundet. Der andere Endbereich (13') weist eine Auslaufschräge auf. Ausgehend von einem ersten Endpunkt (18) an der Basis des ersten Endbereichs (13) erstrecken sich die wendelartigen Erhebungen (5) über einen Mittelpunktswinkel (9) von ungefähr 280° bis zu einem zweiten Endpunkt (18') an der Basis des zweiten Endbereichs (13').

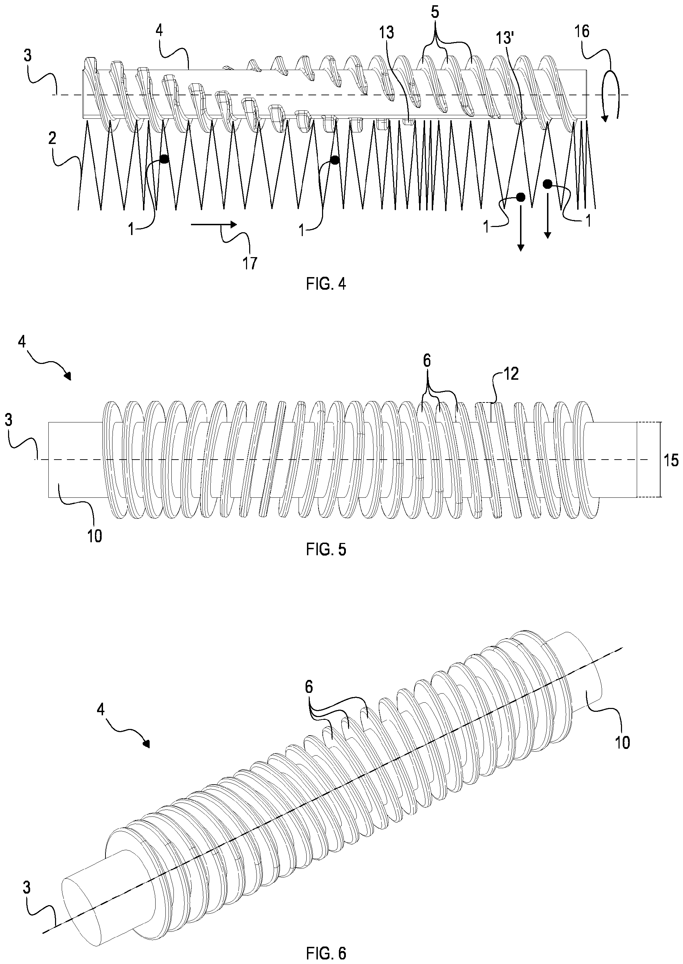

In Figur 4 wird der Filterreinigungsprozess mit einer Walze (4) als Teil der erfindungsgemässen Vorrichtung gezeigt. Die Vorrichtung umfasst noch weitere Komponenten, welche in Figur 4 nicht gezeigt sind. Zu diesen Komponenten gehören unter anderem eine Halterung für die Walze (4), ein Antrieb, um die Walze (4) in Rotation (16) zu versetzen, und eine mechanische Verbindung zwischen Walze (4) und Antrieb. Ein Teil der wendelartigen Erhebungen (5) der Walze (4) sind zwischen Falten eines Lamellenfilters (2) angeordnet. Die Vorrichtung mit der Walze (4) ist in diesem Ausführungsbeispiel stromabwärts zum Filter angeordnet, so dass die vor der Reinigung im Filter (2) vorhandenen Festkörper (1) auf der der Walze (4) abgewandten Seite des Filters (2) liegen.

Wird die Walze (4) vom Antrieb in Rotation (16; siehe auch Figur 1) versetzt, wird ein Flächenkontakt zwischen den Seitenflächen der wendelartigen Erhebungen (5) und der Filteroberfläche erzeugt. Durch die Rotation (16) werden die Falten des Filters (2) in axialer Richtung (17) der Längsachse (3) verschoben. Mit dem verbreiterten Endbereich (13) wird eine Lamellenfalte des Filters (2) kontaktiert. Durch die Rotation der Walze werden die Filterlamellen gespreizt und im Filter (2) vorhandene Festkörper (1) werden aus dem Filter (2) gelöst. Das Aufspreizen dauert so lange, bis der zweite Endbereich (13') der Erhebung erreicht ist. Sobald der Kontakt zwischen Erhebung (5) und Filteroberfläche abbricht, bewegt sich eine Filterlamelle zurück in Richtung Ausgangsposition (oder bis zur Ausgangsposition), bevor sie erneut von einer Erhebung (5) verschoben wird. Durch die Bewegung im Filter (2) und durch die Rückbewegung der Filterlamellen wird das Filtermaterial in Vibration versetzt, was das Herauslösen der Festkörper (1) erleichtert. Durch die Schwerkraft werden die herausgelösten Festkörper (1) aus dem Filterbereich in einen Auffangbehälter (nicht dargestellt) befördert.

Figuren 5 und 6 zeigen eine alternative Ausführungsform der Walze (4) mit einer Vielzahl an auf der Aussenwand (10) der Walze (4) zur Längsachse (3) der Walze (4) schräg angeordneten, ringförmigen Erhebungen (6; nur teilweise markiert). Der Normalenvektor der ringförmigen Erhebungen (6) ist in dieser beispielhaften Ausführung in einem Abschrägungswinkel von 10° zur Längsachse (3) der Walze (4) angeordnet. Der Versatzwinkel beträgt ungefähr 15°. Die maximale radiale Höhe (12) der Erhebungen (6) beträgt ungefähr 30 % des Durchmessers (15) der Walze (4) .

Auch mit dieser Ausführungsform lassen sich die Lamellen eines Filters (2) ähnlich wie in Figur 4 in axialer Richtung (17) hin- und herbewegen, so dass das Filtermaterial durch die Bewegungen in Vibration versetzt wird und die Falten gespreizt und wieder zusammengeführt werden, um Festkörper (1) daraus zu lösen.

## Patentansprüche

1. Vorrichtung zum Reinigen eines Filters (2), vorzugsweise eines Lamellenfilters (2), die Vorrichtung umfassend:
- eine um eine Längsachse (3) rotierbare Walze (4), umfassend
- eine Vielzahl an auf einer Aussenwand (10) der Walze verlaufenden wendelartigen Erhebungen (5); und/oder
- eine Vielzahl an auf einer Aussenwand (10) der Walze (4) zur Längsachse (3) der Walze (4) schräg angeordnete, ringförmige Erhebungen (6);
wobei jeweils zwei benachbarte Erhebungen (5, 6) in einem axialen Abstand (7) entlang der Längsachse (3) der Walze (4) und um einem Versatzwinkel (8) um die Längsachse (3) der Walze (4) relativ versetzt zueinander angeordnet sind.

2. Vorrichtung nach Anspruch 1, wobei die wendelartigen Erhebungen (5) eine identische Steigung (11) haben und der axiale Abstand (7) 10 % bis 150 % der Steigung (11), bevorzugt 20 % bis 100 % der Steigung (11), noch mehr bevorzugt 30 % bis 70 % der Steigung (11), am meisten bevorzugt 50 % der Steigung entspricht.

3. Vorrichtung nach einem der vorangehenden Ansprüche, wobei der Versatzwinkel (8) von 1° bis 180° reicht, vorzugsweise von 3° bis 90° reicht, noch mehr bevorzugt von 5° bis 30° reicht, am meisten bevorzugt von 10° bis 20° reicht.

4. Vorrichtung nach einem der vorangehenden Ansprüche, wobei sich die wendelartigen Erhebungen (5) jeweils über einen Mittelpunktswinkel (9) von 180° bis 340°, vorzugsweise 220° bis 320°, am meisten bevorzugt 260° bis 300° des Umfangs der Aussenwand (10) der Walze erstrecken.

5. Vorrichtung nach einem der vorangehenden Ansprüche, wobei die wendelartigen Erhebungen (5) eine Steigung (11) haben, welche von 100 % bis 600 %, bevorzugt von 200 % bis 500 %, noch mehr bevorzugt von 300 % bis 400 %, am meisten bevorzugt von 320 % bis 340 % einer maximalen radialen Höhe (12) der wendelartigen Erhebungen entspricht.

6. Vorrichtung nach einem der vorangehenden Ansprüche, wobei ein Endbereich (13) der wendelartigen Erhebungen (5) breiter ist als ein an den Endbereich (13) angrenzender Bereich (14) .

7. Vorrichtung nach einem der vorangehenden Ansprüche, wobei eine maximale radiale Höhe (12) der Erhebungen (5, 6) von 3 % bis 120 %, bevorzugt von 5 % bis 50 %, noch mehr bevorzugt von 15 % bis 40 %, am meisten bevorzugt von 20 % bis 30 % des Durchmessers (15) der Aussenwand (10) der Walze (4) beträgt.

8. Vorrichtung nach einem der vorangehenden Ansprüche, wobei die wendelartigen Erhebungen (5) eine veränderliche radiale Höhe aufweisen.

9. Vorrichtung nach einem der vorangehenden Ansprüche, wobei
- mindestens ein Endbereich (13') der wendelartigen Erhebungen eine Auslaufschräge aufweist; und/oder
- mindestens ein Endbereich (13) der wendelartigen Erhebungen abgerundet ist.

10. Filterungssystem umfassend:
- ein Gebläse;
- einen Filter (2), vorzugsweise einen Lamellenfilter (2), gekoppelt mit dem Gebläse über ein Luftführungssystem;
- eine Vorrichtung zum Reinigen des Filters (2) nach einem der vorangehenden Ansprüche, wobei die Vorrichtung derart angeordnet oder anordenbar ist, dass zumindest ein Teil der Vielzahl an Erhebungen (5, 6) der Walze (4) in Zwischenräume des Filters (2), vorzugsweise des Lamellenfilters (2), ragt.

11. Filterungssystem nach Anspruch 10, wobei das Luftfilterungssystem Teil eines Geräts ist, ausgewählt aus der Gruppe bestehend aus:
- Reinigungsgeräte, vorzugsweise Reinigungsroboter;
- Klimaanlagen;
- Lüftungsanlagen;
- Heizungsanlagen; und
- Luftreinigungsgeräte.

12. Filterungssystem nach einem der Ansprüche 10 bis 11, wobei die Vorrichtung derart angeordnet oder anordenbar ist, dass die Längsachse (3) der Walze (4) in einem Winkel von 30° bis 150°, vorzugsweise von 50° bis 130°, mehr bevorzugt von 70° bis 110°, noch mehr bevorzugt von 85° bis 95°, am meisten bevorzugt von ungefähr 90° zu einer Faltenrichtung des Filters (2), vorzugsweise des Lamellenfilters (2), angeordnet ist.

13. Verfahren zum Reinigen eines Filters (2), vorzugsweise eines Lamellenfilters (2), vorzugsweise mit einer Vorrichtung nach einem der Ansprüche 1 bis 9, das Verfahren umfassend den Schritt:
a. Rotieren (16) einer Walze (4) um ihre Längsachse (3), die Walze (4)umfassend eine Vielzahl an auf einer Aussenwand (10) der Walze (4) verlaufenden wendelartigen Erhebungen (5) und/oder eine Vielzahl an auf einer Aussenwand der Walze zur Längsachse der Walze schräg angeordnete, ringförmige Erhebungen (6); derart, dass
- einzelne Falten des Filters (2) durch die rotierenden Erhebungen (5, 6) bewegt werden; und
- im Filter (2) festsitzende Festkörper (1) durch das Bewegen gelöst werden.

14. Verfahren nach Anspruch 13, wobei die Falten derart bewegt werden, dass die einzelnen Falten durch die Erhebungen (5, 6) aus einer Ausgangsposition in axialer Richtung (17) der Walze (4) verschoben werden und sich in die Richtung der Ausgangsposition zurückbewegen, vorzugsweise sich ruckartig in die Richtung der Ausgangsposition zurückbewegen.

15. Verfahren nach einem der Ansprüche 13 bis 14, wobei jeweils eine Erhebung (5, 6) höchstens drei Falten des Filter (2) zusammen, vorzugsweise höchstens zwei Falten des Filters (2) zusammen, noch mehr bevorzugt höchstens eine Falte des Filters (2) bewegt.
